# EUROPEAN PATENT SPECIFICATION

(11) **EP 4 168 244 B1**
(45) Date of publication and mention of the grant of the patent: **15.10.2025**
(21) Application number: 21720573.1
(22) Date of filing: 15.04.2021
(51) Int. Cl.: B29C 73/10, B29C 37/00, B29C 73/12, B29C 73/26

(54) **METHOD OF REPAIRING DAMAGE TO A THERMOPLASTIC COMPOSITE ELEMENT**
VERFAHREN ZUR REPARATUR VON SCHÄDEN AN EINEM THERMOPLASTISCHEN VERBUNDELEMENT
PROCÉDÉ DE RÉPARATION D'UN ENDOMMAGEMENT D'UN ÉLÉMENT COMPOSITE THERMOPLASTIQUE

(30) Priority: 22.06.2020 PL 42429720
(43) Date of publication of application: 26.04.2023
(73) Proprietor: POLSKIE ZAKLADY LOTNICZE SPOLKA Z OGRANICZONA ODPOWIEDZIALNOSCIA, 39-300 Mielec (PL)
(72) Inventor: DWORAK, Adam, 39-450 Baranow Sandomierski (PL); BANAS, Aleksander, 35-513 Rzeszow (PL); MADRY, Janusz, 39-300 MIelec (PL); SIENICKI, Jaroslaw, 39-300 Mielec (PL); GLODZIK, Marcin, 39-300 Mielec (PL)
(74) Representative: AOMB Polska Sp. z.o.o.
(86) International application number: PCT/IB2021/053099
(87) International publication number: WO 2021/260447

(56) References cited:
- WO-A1-2017/081456
- US-A1- 2019 310 081
- US-B2- 9 545 782

## Description

### Field of the invention

The invention relates to a method of repairing damage to a thermoplastic composite element, in particular an aircraft element damaged during operation.

### Prior art

One of the problems associated with operation of elements made of thermoplastic composites is the occurrence of damage caused by a hit of an external object or cracks resulting from the intense structural movement of the composite structure. Repair of damaged structures made of welding, mechanical or energy-assisted. In these cases, a repair consists in welding together fragments of damaged thermoplastic composite element.

In the currently used methods of welding together elements made of thermoplastic composites, and thus also repairing damaged elements made of these composites, the plasticization effect of a polymer matrix of the thermoplastic composite when subjected to high temperatures is used; however, this requires heating the edges of the damaged element to be heated to temperatures close to the melting point of the matrix polymer. In the case of polymers with a high melting point, such as polyetheretherketone (PEEK), it is necessary to supply large amounts of heat to ensure the temperature in the welding zone even above 340°C, which is not possible under all conditions.

On the other hand, in methods using other ways of local heating of the welded fragments of a damaged thermoplastic element, such as ultrasonic, induction or electrofusion methods, it is necessary to use equipment on both sides of the surface of the repaired element, which is not always possible in case of hard-to-reach sites. Moreover, repairing damaged structures with a clearly marked curvature requires the use of a repair element with an accurately reproduced curvature. This necessitates the manufacture of dedicated tooling for forming the repair element.

Document WO 2017/081456 A1 discloses a method of repairing damage to a thermoplastic composite element according to the preamble of claim 1.

### Summary of the invention

The aim of the present invention was to provide a method of repairing damage to a thermoplastic composite element devoid of the above-discussed disadvantages of known solutions, and in particular a method allowing to repair damaged elements of a thermoplastic structure with variable geometry without the need to adjust the tooling used each time, as well as to eliminate the need to use special tooling for molding thermoplastic composites and the need to supply large amounts of heat to the area to be repaired, even in case of thermoplastic composites with a matrix of high melting polymers, such as e.g. PEEK.

The subject of the invention is a method of repairing damage to a thermoplastic composite element, in particular an aircraft element, wherein a socket is milled at the site of damage to the thermoplastic composite element. Next, a patch of thermosetting material comprising a reinforcement phase of fabric layers and a matrix of thermosetting resin is formed in this socket, said patch having a shape and size corresponding to the socket geometry. In the next step of the method, the patch is cured and finally the cured patch is glued into the socket by means of an adhesive, wherein in the step of forming the patch in the socket, the following are placed sequentially:
- a separating layer in form of a film or a separating agent;
- sections of the fabric layers constituting the reinforcing phase of the thermosetting material, impregnated with a matrix of thermosetting resin, whereby the number of fabric layers, their total thickness as well as the shape and size of individual sections corresponds to the geometry of the socket;
and then such prepared patch is covered successively with: a perforated separating foil, an absorbing fabric, a separating foil, a heating blanket, a breathable fabric and a vacuum foil, and the entire repair package thus formed is sealed to the surface of the thermoplastic composite component being repaired by means of a sealing tape, preferably a butyl tape.

Preferably, the socket is milled layer-wise to form a stepped structure on the damaged surface of the thermoplastic composite element.

Preferably, once the repair pack is attached to the surface of the thermoplastic composite element to be repaired, air is pumped out of the repair pack.

Preferably, the patch of thermosetting material is cured using a heating blanket provided with an external portable power supply and control device.

Preferably, the adhesive is a thermosetting adhesive, but it is also possible to use other adhesives applied as a thin layer and curable as a result of a chemical reaction, e.g. between the components of a two-component adhesive.

In the embodiment using the thermosetting adhesive as an adhesive, preferably in the step of gluing the cured patch into the socket, the adhesive layer is applied to the contact surface of the socket and the cured patch, next the cured patch is pressed into the socket, and then on the cured patch placed in the socket the following elements are placed sequentially: the perforated separating foil, the absorbing fabric, the separating film, the heating blanket, the breathable fabric and the vacuum foil, and afterwards the entire vacuum package thus formed is sealed to the surface of the thermoplastic composite element to be repaired by means of the sealing tape, preferably a butyl tape, air is pumped out of the package and the adhesive layer is cured using a heating blanket provided with the external portable power supply and control device.

Preferably, in the thermoplastic composite the matrix is polyetheretherketone (PEEK) and the reinforcing phase is carbon fiber.

Preferably, carbon fiber fabric layers are used as the reinforcing phase of the thermosetting material.

Preferably, an epoxy resin is used as the matrix of the thermosetting material.

The method according to the invention allows for the repair of damages to a thermoplastic composite element that can be implemented in hangar conditions, without the need to use complicated and expensive equipment, without the need to supply large amounts of heat to the repaired area, and at the same time maintaining a high quality of the repaired damage, guaranteeing its sufficient strength mechanical.

### Brief description of figures of drawing

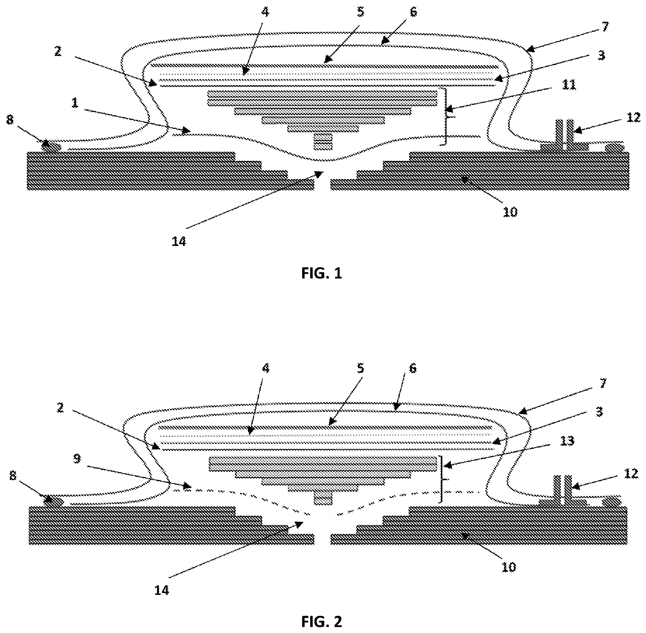

The method according to the invention in an embodiment is illustrated in the drawing, in which fig. 1 shows the step of curing a patch of thermosetting material in a socket milled in a damaged thermoplastic composite element, and fig. 2 shows the step of gluing the cured patch of the thermoset composite into the socket milled in the damaged thermoplastic composite element.

### Detailed description of an exemplary embodiment of the invention

In the exemplary embodiment of the method according to the invention, the damaged element to be repaired is made of a thermoplastic composite, in which the matrix is polyetheretherketone (PEEK) and the reinforcing phase is carbon fiber.

After identifying the damage in the first repair step, a socket 14 is milled at the site of the damage to the thermoplastic composite element 10, the milling being performed layer-wise to form a stepped structure on the surface of the damage to the thermoplastic composite element 10. Thus, the original irregular shape of the identified damage (e.g. a crack, a cavity) is replaced with a milled socket with the so-called stepped gradation, formed by removing the thermoplastic composite layer-wise from the damaged area, starting from the deepest point of the damage to the surface of the repaired element, the area of each successively removed layer being larger than the previous one.

Thereafter, a repair patch is formed in the socket 14, said patch being made of a thermosetting material containing a reinforcement phase of fabric layers and a matrix of a thermosetting resin. In the exemplary embodiment, the reinforcing phase of the thermosetting material is made of carbon fiber fabric layers 11, and the matrix is epoxy resin. As shown in Fig. 1, in the patch formation step, the socket 14 is lined with a separating layer 1, which in the exemplary embodiment is Tooltec^{®} A007 foil from Airtech [polyethylene terephthalate (PTFE) foil tape reinforced with glass fiber and provided with a layer of silicone adhesive]. Then, sections of the fabric layers 11 constituting the reinforcing phase of the thermosetting material impregnated with a matrix of thermosetting resin are placed in the socket 14, whereby the number of fabric layers 11, their total thickness, as well as the shape and size of individual sections correspond to the geometry of the milled socket 14. Such prepared patch is covered successively with: a perforated separating foil 2 (which in the exemplary embodiment is RF-2500-RED-30-1370-NP-NP-FNS foil), an absorbing fabric 3 [which in the exemplary embodiment is Econostitch^{®} delaminating polyamide fabric from Airtech], a separating foil 4 [which in the exemplary embodiment is RF-2500-RED-30-1370-PIN-P3-FNS foil], a heating blanket 5 [which in the exemplary embodiment is a heating blanket with a Leslie portable power supply and control device], a breathable fabric 6 [which in the exemplary embodiment is the medium weight polyester mat Econoweaver^{®} 44 from Airtech] and a vacuum foil 7 [which in the exemplary embodiment is Wrightlon^{®} 5400 polyamide film from Airtech]. The entire repair package thus formed is sealed to the surface of the thermoplastic composite component 10 being repaired by means of a sealing tape 8, which in the exemplary embodiment is a butyl tape. Afterwards air is pumped out of the attached and sealed repair pack, and the patch is then cured using a heating blanket 5 provided with an external portable power supply and control device 12. In other words, the patch curing takes place in the socket 14 lined with a separating layer 1, so that the cured patch 13 has a shape that accurately reflects the geometry of the socket 14 milled in the repaired element and completely fills the socket. The cured patch 13 thus prepared is glued into the socket 14 by means of an adhesive 9, which in the exemplary embodiment is a thermosetting adhesive, such as LOCTITE EA 9323 two-component epoxy adhesive paste from Henkel. In this step a layer of thermosetting adhesive is applied to the contact surface of the socket 14 and the cured patch 13, and then the cured patch 13 is pressed into the socket 14. Afterwards the following elements are placed sequentially on the cured patch (13) placed in the socket (14): the perforated separating film 2, the absorbing fabric 3, the separating foil 4, the heating blanket 5, the breathable fabric 6 and the vacuum foil 7. The entire vacuum packet thus formed is sealed to the surface of the repaired thermoplastic composite element 10 by means of a sealing tape 8, which in the exemplary embodiment is a butyl tape. Air is pumped out of the packet and the thermosetting adhesive layer is cured using the heating blanket 5 provided with the external portable power supply and control device 12. The permanently glued cured patch 13 prevents further damage propagation.

### List of references in drawings

1 separating layer
2 perforated separating foil
3 absorbing fabric
4 separating foil
5 heating blanket
6 breathable fabric
7 vacuum foil
8 sealing tape
9 adhesive
10 thermoplastic composite element
11 sections of fabric layers
12 external portable power supply and control device
13 cured patch
14 socket

## Claims

1. A method of repairing damage to a thermoplastic composite element, in particular an aircraft element, wherein
a socket (14) is milled at the site of damage to the thermoplastic composite element (10), then in said socket a patch is formed from a thermosetting material containing a reinforcing phase of fabric layers and a matrix of thermosetting resin, said patch having a shape and size corresponding to the socket geometry, the patch is then cured and finally the cured patch (13) is glued into the socket (14) by means of an adhesive (9), **characterized in that**
in the step of forming the patch in the socket (14), the following are placed sequentially:
- a separating layer (1) in form of a film or a separating agent;
- sections of the fabric layers (11) constituting the reinforcing phase of the thermosetting material, impregnated with a matrix of thermosetting resin, whereby the number of fabric layers (11), their total thickness as well as the shape and size of individual sections corresponds to the geometry of the socket (14);
and then such prepared patch is covered successively with: a perforated separating foil (2), an absorbing fabric (3), a separating foil (4), a heating blanket (5), a breathable fabric (6) and a vacuum foil (7),
and the entire repair package thus formed is sealed to the surface of the thermoplastic composite component (10) being repaired by means of a sealing tape (8), preferably a butyl tape.

2. The method according to claim 1, **characterized in that** the socket (14) is milled layer-wise to form a stepped structure on the damaged surface of the thermoplastic composite element (10).

3. The method according to claim 1 or 2, **characterized in that** once the repair pack is attached to the surface of the thermoplastic composite element (10) to be repaired, air is pumped out of the repair pack.

4. The method according to one of claims 1-3, **characterized in that** the patch of thermosetting material is cured using a heating blanket (5) provided with an external portable power supply and control device (12).

5. The method according to one of the claims 1-4, **characterized in that** the adhesive (9) is a thermosetting adhesive.

6. The method according to claim 5, **characterized in that** in the step of gluing the cured patch (13) into the socket, the adhesive layer (9) is applied to the contact surface of the socket (14) and the cured patch (13), next the cured patch (13) is pressed into the socket (14), and then on the cured patch (13) placed in the socket (14) the following elements are placed sequentially: the perforated separating foil (2), the absorbing fabric (3), the separating film (4), the heating blanket ( 5), the breathable fabric (6) and the vacuum foil (7), and afterwards the entire vacuum package thus formed is sealed to the surface of the thermoplastic composite element (10) to be repaired by means of the sealing tape (8), preferably a butyl tape, air is pumped out of the package and the adhesive layer (9) is cured using a heating blanket (5) provided with the external portable power supply and control device (12).

7. The method according to one of the claims 1-5, **characterized in that** in the thermoplastic composite the matrix is polyetheretherketone (PEEK) and the reinforcing phase is carbon fiber.

8. The method according to one of the claims 1-6, **characterized in that** carbon fiber fabric layers (11) are used as the reinforcing phase of the thermosetting material.

9. The method according to one of the claims 1-7, **characterized in that** an epoxy resin is used as the matrix of the thermosetting material.

## Patentansprüche

1. Verfahren zum Reparieren von Schäden an einem thermoplastischen Verbundelement, insbesondere einem Flugzeugelement, wobei
an der Stelle der Beschädigung des thermoplastischen Verbundelements (10) eine Aussparung (14) gefräst wird,
dann wird in dieser Aussparung ein Flicken aus einem duroplastischen Material gebildet, das eine Verstärkungsphase aus Gewebelagen und eine Matrix aus duroplastischem Harz enthält, wobei der Flicken eine Form und Größe aufweist, die der Geometrie der Aussparung entspricht, der Flicken anschließend ausgehärtet wird und schließlich der ausgehärtete Flicken (13) mittels eines Klebstoffs (9) in die Aussparung (14) geklebt wird, **dadurch gekennzeichnet, dass**
beim Ausbilden des Flickens in der Aussparung (14) nacheinander Folgendes eingebracht wird:
- eine Trennschicht (1) in Form einer Folie oder eines Trennmittels;
- Abschnitte der Gewebelagen (11), die die Verstärkungsphase des duroplastischen Materials bilden und mit einer Matrix aus duroplastischem Harz imprägniert sind, wobei die Anzahl der Gewebelagen (11), ihre Gesamtdicke sowie die Form und Größe der einzelnen Abschnitte der Geometrie der Aussparung (14) entsprechen;
und dann wird ein so vorbereitetes Flicken nacheinander bedeckt mit: einer perforierten Trennfolie (2), einem absorbierenden Gewebe (3), einer Trennfolie (4), einer Heizdecke (5), einem atmungsaktiven Gewebe (6) und einer Vakuumfolie (7),
und das so gebildete gesamte Reparaturpaket wird mittels eines Dichtungsbandes (8), vorzugsweise eines Butylbandes, an der Oberfläche des zu reparierenden thermoplastischen Verbundelements (10) abgedichtet.

2. Verfahren nach Anspruch 1, **dadurch gekennzeichnet, dass** die Aussparung (14) schichtweise gefräst wird, um eine Stufenstruktur auf der beschädigten Oberfläche des thermoplastischen Verbundelements (10) zu bilden.

3. Verfahren nach Anspruch 1 oder 2, **dadurch gekennzeichnet, dass** nach dem Anbringen des Reparaturpakets an der Oberfläche des zu reparierenden thermoplastischen Verbundelements (10) Luft aus dem Reparaturpaket abgepumpt wird.

4. Verfahren nach einem der Ansprüche 1-3, **dadurch gekennzeichnet, dass** das Flicken aus wärmehärtbarem Material unter Verwendung einer Heizdecke (5) ausgehärtet wird, die mit einem externen tragbaren Stromversorgungs- und Steuerungsgerät (12) versehen ist.

5. Verfahren nach einem der Ansprüche 1 bis 4, **dadurch gekennzeichnet, dass** der Klebstoff (9) ein wärmehärtbarer Klebstoff ist.

6. Verfahren nach Anspruch 5, **dadurch gekennzeichnet, dass** beim Einkleben des ausgehärteten Flickens (13) in die Aussparung die Klebeschicht (9) auf die Kontaktfläche der Aussparung (14) und den ausgehärteten Flicken (13) aufgetragen wird, als nächstes der ausgehärtete Flicken (13) in die Aussparung (14) gedrückt wird und dann auf das in die Aussparung (14) gelegte ausgehärtete Flicken (13) nacheinander die folgenden Elemente gelegt werden: die perforierte Trennfolie (2), das absorbierende Gewebe (3), die Trennfolie (4), die Heizdecke ( 5), das atmungsaktive Gewebe (6) und die Vakuumfolie (7), und anschließend wird die gesamte so gebildete Vakuumverpackung mittels des Dichtungsbandes (8), vorzugsweise eines Butylbandes, an die Oberfläche des zu reparierenden thermoplastischen Verbundelements (10) versiegelt, Luft wird aus der Verpackung gepumpt und die Klebeschicht (9) wird unter Verwendung einer Heizdecke (5) ausgehärtet, die mit dem externen tragbaren Stromversorgungs- und Steuerungsgerät (12) versehen ist.

7. Verfahren nach einem der Ansprüche 1 bis 5, **dadurch gekennzeichnet, dass** in dem thermoplastischen Verbundelement die Matrix aus Polyetheretherketon (PEEK) und die Verstärkungsphase aus Kohlenstofffasern besteht.

8. Verfahren nach einem der Ansprüche 1 bis 6, **dadurch gekennzeichnet, dass** Kohlenstofffasergewebelagen (11) als Verstärkungsphase des duroplastischen Materials verwendet werden.

9. Verfahren nach einem der Ansprüche 1 bis 7, **dadurch gekennzeichnet, dass** als Matrix des duroplastischen Materials ein Epoxidharz verwendet wird.

## Revendications

1. Procédé de réparation d'un élément composite thermoplastique, en particulier d'un élément d'aéronef, dans laquelle
douille (14) est fraisée à l'endroit où l'on a endommagé le
élément composite thermoplastique (10), puis dans ladite emboîture un patch est formé à partir d'un matériau thermodurcissable contenant une phase de renforcement de couches de tissu et une matrice de résine thermodurcissable, ledit patch ayant une forme et une taille correspondant à la géométrie de l'emboîture, le patch est ensuite durci et enfin le patch durci (13) est collé dans l'emboîture (14) au moyen d'un adhésif (9), **caractérisé en ce que**
lors de l'étape de formation de la pièce dans l'emboîture (14), les éléments suivants sont placés successivement :
- couche de séparation (1) sous forme de film ou d'agent de séparation ;
- sections des couches de tissu (11) constituant la phase de renforcement du matériau thermodurcissable, imprégnées d'une matrice de résine thermodurcissable, le nombre de couches de tissu (11), leur épaisseur totale ainsi que la forme et la taille des sections individuelles correspondant à la géométrie de l'emboîture (14) ;
puis cette pièce préparée est recouverte successivement : d'une feuille de séparation perforée (2), d'un tissu absorbant (3), d'une feuille de séparation (4), d'une couverture chauffante (5), d'un tissu respirant (6) et d'une feuille sous vide (7),
et l'ensemble du paquet de réparation ainsi formé est scellé à la surface du composant composite thermoplastique (10) à réparer au moyen d'un ruban de scellement (8), de préférence un ruban de butyle.

2. Procédé selon la revendication 1, **caractérisée en ce que** l'emboîture (14) est fraisée par couches pour former une structure en escalier sur la surface endommagée de l'élément composite thermoplastique (10).

3. Procédé selon la revendication 1 ou 2, **caractérisée en ce qu'**une fois que la poche de réparation est fixée à la surface de l'élément composite thermoplastique (10) à réparer, l'air est pompé hors de la poche de réparation.

4. Procédé selon l'une des revendications 1 à 3, **caractérisée en ce que** la pièce de matériau thermodurcissable est durcie à l'aide d'une couverture chauffante (5) munie d'une alimentation électrique portable externe et d'un dispositif de commande (12).

5. Procédé selon l'une des revendications 1 à 4, **caractérisé en ce que** l'adhésif (9) est un adhésif thermodurcissable.

6. Procédé selon la revendication 5, **caractérisée en ce que** dans l'étape de collage du patch durci (13) dans l'emboîture, la couche adhésive (9) est appliquée sur la surface de contact de l'emboîture (14) et du patch durci (13), puis le patch durci (13) est pressé dans l'emboîture (14), et ensuite sur le patch durci (13) placé dans l'emboîture (14), les éléments suivants sont placés séquentiellement : la feuille de séparation perforée (2), le tissu absorbant (3), le film de séparation (4), la couverture chauffante (5), le tissu respirant (6) et la feuille de mise sous vide (7), puis l'ensemble de l'emballage sous vide ainsi formé est scellé à la surface de l'élément composite thermoplastique (10) à réparer au moyen de la bande de scellement (8), de préférence un ruban en butyle, l'air est pompé hors de l'emballage et la couche adhésive (9) est durcie à l'aide d'une couverture chauffante (5) fournie avec le dispositif portable externe d'alimentation et de contrôle (12).

7. Procédé selon l'une des revendications 1 à 5, **caractérisée en ce que** dans le composite thermoplastique, la matrice est du polyétheréthercétone (PEEK) et la phase de renforcement est de la fibre de carbone.

8. Procédé selon l'une des revendications 1 à 6, **caractérisé par** l'utilisation de couches de tissu de fibres de carbone (11) comme phase de renforcement du matériau thermodurcissable.

9. Procédé selon l'une des revendications 1 à 7, **caractérisé par** l'utilisation d'une résine époxy comme matrice du matériau thermodurcissable.
